# EUROPÄISCHE PATENTSCHRIFT

(11) **EP 3 158 361 B1**
(45) Veröffentlichungstag und Bekanntmachung des Hinweises auf die Patenterteilung: **18.04.2018**
(21) Anmeldenummer: 15725306.3
(22) Anmeldetag: 22.05.2015
(51) Int. Cl.: G01S 15/93, G01S 7/52

(54) **VERFAHREN ZUM UNTERDRÜCKEN VON ECHOSIGNALEN EINER ANHÄNGERVORRICHTUNG AN EINEM KRAFTFAHRZEUG, FAHRERASSISTENZEINRICHTUNG UND KRAFTFAHRZEUG**
METHOD FOR SUPPRESSING ECHO SIGNALS OF A TRAILER DEVICE ON A MOTOR VEHICLE, DRIVER ASSISTANCE UNIT, AND MOTOR VEHICLE
PROCÉDÉ PERMETTANT DE SUPPRIMER LES SIGNAUX D'ÉCHO D'UN SYSTÈME DE REMORQUE SUR UN VÉHICULE AUTOMOBILE, DISPOSITIF D'AIDE À LA CONDUITE ET VÉHICULE AUTOMOBILE

(30) Priorität: 21.06.2014 DE 102014009177
(43) Veröffentlichungstag der Anmeldung: 26.04.2017
(73) Patentinhaber: Valeo Schalter und Sensoren GmbH, 74321 Bietigheim-Bissingen (DE)
(72) Erfinder: LUDWIG, Michael, 68305 Mannheim (DE); BRESSLER, Ulrich, 74321 Bietigheim-Bissingen (DE); JARZABEK, Zbyszek, 74321 Bietigheim-Bissingen (DE)
(86) Internationale Anmeldenummer: PCT/EP2015/061380
(87) Internationale Veröffentlichungsnummer: WO 2015/193060

(56) Entgegenhaltungen:
- EP-A1- 2 523 015
- DE-A1-102012 015 517
- GB-A- 2 305 287

## Beschreibung

Die Erfindung betrifft ein Verfahren zum Unterdrücken von Echosignalen einer Anhängervorrichtung an einem Heckbereich eines Kraftfahrzeugs, bei welchem eine Ultraschallsensorvorrichtung mit einer Mehrzahl von Ultraschallsensoren im Heckbereich angeordnet wird, und mittels der Ultraschallsensorvorrichtung eine Erfassung eines Objekts in der Umgebung des Kraftfahrzeugs durchgeführt wird. Des Weiteren betrifft die Erfindung eine Fahrerassistenzeinrichtung sowie ein Kraftfahrzeug mit einer derartigen Fahrerassistenzeinrichtung.

Fahrerassistenzeinrichtungen, wie beispielsweise ein Parkassistenzsystem oder ein ACC(Adaptive Cruise Control)-System, sind bekannt. Derartige Fahrerassistenzsysteme umfassen üblicherweise eine Ultraschallsensorvorrichtung, die am Kraftfahrzeug angeordnet ist, und mittels Ultraschallsensoren die Umgebung des Kraftfahrzeugs beispielsweise dahingehend erfasst, ob Objekte detektiert werden, die für das weitere Fortbewegen des Kraftfahrzeugs im Weg sind.

Ein Ultraschallsensor sendet bekanntlich ein Sendesignal, welches ein Schallsignal ist. Das Sendesignal reflektiert dann an Hindernissen beziehungsweise Objekten und wird wieder durch den Ultraschallsensor empfangen, nämlich als Echo. Anhand des empfangenen Echos kann der Abstand zwischen dem Objekt und dem Kraftfahrzeug bestimmt werden. Der Abstand wird dabei in Abhängigkeit von einer Laufzeit des Echos ermittelt, wobei hier eine Zeitdauer zwischen dem Sendezeitpunkt und dem Empfangszeitpunkt gemessen wird. Diese sogenannte direkte Messung basiert somit auf dem Aussenden eines Sendesignals und einem Empfangen eines diesbezüglichen Echosignals durch den gleichen Ultraschallsensor. Darüber hinaus ist es auch bekannt, eine sogenannte indirekte Messung vorzunehmen. Bei dieser wird von einem Ultraschallsensor ein Sendesignal ausgesandt, an einem Objekt reflektiert und das diesbezügliche Echo wird von einem anderen Ultraschallsensor der Ultraschallsensorvorrichtung empfangen.

Ein Problem kann sich dann ergeben, wenn am Fahrzeug angeordnete Elemente, wie beispielsweise eine Anhängerzugvorrichtung beziehungsweise eine Anhängerkupplung, vorhanden sind. Ein derartiges Element stellt aus Sicht des Ultraschallsensors ein reales, zu detektierendes Objekt dar. Die Ultraschallsignale werden von dieser Anhängervorrichtung reflektiert und vom Ultraschallsensor empfangen.

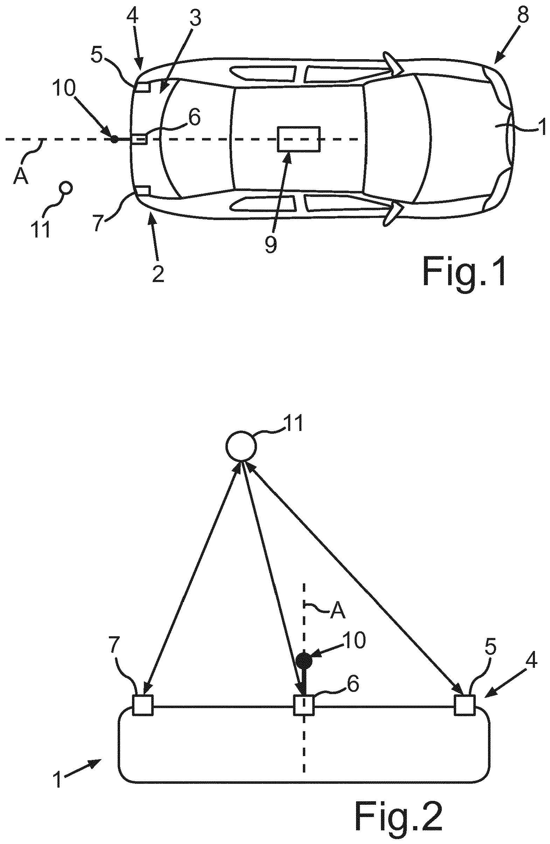

Aus der DE 10 2011 101 013 A1 ist ein Kraftfahrzeug bekannt, bei welchem im Heckbereich vier Ultraschallsensoren angeordnet sind. Diese sind in der Projektionsbetrachtung, wie sie in Fig. 1 und Fig. 2 gezeigt sind, versetzt zu einer Fahrzeuglängsachse, die durch eine dort im Heckbereich angeordnete Anhängerkupplung verläuft, angeordnet, insbesondere symmetrisch angeordnet. Die Abstände der Ultraschallsensoren zu der Anhängerkupplung sind dabei relativ groß, so dass eine Abschattung durch die Anhängerkupplung zwar gegeben, aber relativ gering ist und somit relativ einfach diese Abschattung in der Signalverarbeitung ausgefiltert werden kann.

Darüber hinaus sind Ausführungen bekannt, bei denen im Heckbereich des Fahrzeugs einer der Ultraschallsensoren genau auf einer derartigen Längsachse, auf welcher sich auch die Anhängerkupplung befindet, angeordnet ist. Dies ist beispielsweise aus der EP 0 610 702 A2 bekannt. Bei diesen Ausführungen ist der Abstand des auf dieser Achse befindlichen Ultraschallsensors zur Anhängerkupplung sehr gering und die Abschattung der Anhängerkupplung relativ groß. Dabei entsteht eine hohe Anzahl an Echoreflexionen des ausgesendeten Signals von diesem Ultraschallsensor. Aufgrund der hohen Anzahl an Echoreflexionen durch die Anhängerkupplung werden praktisch alle anderen Echosignale überlagert. Die Nutzsignale können nicht problemlos herausgefiltert werden. Üblicherweise ist es bei derartigen Systemen erforderlich, die Fahrerassistenzeinrichtung abzuschalten, wenn eine derartige Anhängervorrichtung im Heckbereich vorhanden ist, um diesbezüglich nicht unerwünscht verfälschte Informationen zu erhalten und beispielsweise einen Einparkvorgang nur unzureichend durch das System gesteuert durchführen zu können.

DE 10 2012 015517 A1 betrifft ein Verfahren zum Ausblenden eines irrelevanten Objektes beim Detektieren von Hindernissen mittels eines Ultraschallsensors eines Kraftfahrzeugs in einem Umgebungsbereich seitlich neben dem Kraftfahrzeug. Der Ultraschallsensor wird mittels einer Steuereinrichtung angesteuert, welche von dem Ultraschallsensor empfangene Empfangsechos auswertet und abhängig von der Auswertung der Empfangsechos die Hindernisse detektiert. Mittels der Steuereinrichtung wird ein aktueller Lenkwinkel des Kraftfahrzeugs ausgewertet wird und abhängig von der Auswertung des Lenkwinkels ein Empfangsecho des Ultraschallsensors als zu einem Rad des Kraftfahrzeugs gehörend interpretiert wird und das Rad als irrelevantes Objekt detektiert und ausgeblendet.

GB 2 305 287 A offenbart ein Näherungsdetektionssystem, das als eine Fahrzeugumkehrhilfe verwendet wird, umfassend ein Paar von Ultraschallsendern, die an hinteren Ecken des Fahrzeugs angeordnet sind, und einen Empfänger, der vorzugsweise äquidistant zu jedem Sender angeordnet. Durch alternierendes Betätigen jedes Senders ist der Empfänger in der Lage Echoimpulse separat von einem erfassten Hindernis in Bezug auf jeden Sender separat zu erfassen.

EP 2 523 015 A1 offenbart ein Verfahren zum Ausblenden eines irrelevanten Objektes beim Detektieren eines Hindernisses mittels eines nach dem Echolaufzeitprinzip arbeitenden Sensors einer Fahrerassistenzeinrichtung eines Kraftfahrzeugs. Das Verfahren umfasst die Schritte: Senden eines Sendesignals durch den Sensor zu einem Sendezeitpunkt, Empfangen eines Echos durch den Sensor zu einem Empfangszeitpunkt und Überprüfen durch die Fahrerassistenzeinrichtung, ob der Empfangszeitpunkt innerhalb eines vorgegebenen Zeitfensters bezüglich des Sendezeitpunkts liegt. Das Verfahren umfasst weiterhin Überprüfen durch die Fahrerassistenzeinrichtung, ob ein vorbestimmtes Kriterium bezüglich einer Amplitude des Echos erfüllt ist, und Interpretieren des Echos als zu dem irrelevanten Objekt gehörend, falls der Empfangszeitpunkt innerhalb des vorgegebenen Zeitfensters liegt und das auf die Amplitude bezogene Kriterium erfüllt ist. Als irrelevantes Objekt kann ein an dem Kraftfahrzeug angebrachtes Objekt, insbesondere eine Anhängerkupplung des Kraftfahrzeugs, ausgeblendet werden. Der Sensor kann ein Ultraschallsensor sein.

Es ist Aufgabe der vorliegenden Erfindung, ein Verfahren, eine Fahrerassistenzeinrichtung und ein Kraftfahrzeug zu schaffen, bei welchem beziehungsweise mit welchem der Betrieb der Ultraschallsensorvorrichtung mit einer Anhängervorrichtung am Kraftfahrzeug verbessert werden kann.

Diese Aufgabe wird durch ein Verfahren, eine Fahrerassistenzeinrichtung und ein Kraftfahrzeug gemäß den unabhängigen Ansprüchen gelöst.

Bei einem erfindungsgemäßen Verfahren zum Unterdrücken von Echosignalen einer Anhängervorrichtung an einem Heckbereich eines Kraftfahrzeugs, wird eine Ultraschallsensorvorrichtung mit einer Mehrzahl von Ultraschallsensoren im Heckbereich angeordnet, und mittels der Ultraschallsensorvorrichtung ist ein Objekt in der Umgebung des Kraftfahrzeugs erfassbar. Ein wesentlicher Gedanke der Erfindung ist darin zu sehen, dass ein erster Ultraschallsensor der im Heckbereich angeordneten Ultraschallsensoren in einem Objekterfassungsbereich zum Erfassen eines von einer im Heckbereich angeordneten Anhängervorrichtung unterschiedlichen Objekts nur zum Empfangen von Echosignalen von von zumindest einem anderen Ultraschallsensor ausgesendeten Sendesignalen betrieben wird und das Senden von Sendesignalen dieses ersten Ultraschallsensors verhindert wird. Es wird also bei Konstellationen, bei denen an einem Kraftfahrzeug im Heckbereich eine Anhängervorrichtung verbaut ist, ein diesbezüglich nächstgelegener Ultraschallsensor der Ultraschallsensorvorrichtung nicht in einem Sendebetrieb betrieben, sondern nur in einem Empfangsbetrieb. Dieser erste Ultraschallsensor sendet somit keine eigenen Ultraschallsignale aus, sondern empfängt nur Echosignale, die reflektierte Sendesignale der anderen Ultraschallsensoren der Ultraschallsensorvorrichtung sind. Durch eine derartige Betriebsweise wird dieser erste Ultraschallsensor nicht im direkten Betrieb betrieben, sondern nur im indirekten Betrieb. Dadurch wird verhindert, dass keine Echosignale seiner eigenen ausgesendeten Sendesignale auftreten, da er grundsätzlich keine Sendesignale in diesem Objekterfassungsbetrieb aussendet. Die fälschliche Detektion der Anhängerkupplung als Objekt in der Umgebung des Fahrzeugs wird gerade bei derartigen Ausgestaltungen somit unterbunden. Dieser erste Ultraschallsensor ist derjenige von den im Heckbereich angeordneten Ultraschallsensoren, der den geringsten Abstand zu der Anhängervorrichtung aufweist. Dieser erste Ultraschallsensor ist insbesondere so am Heckbereich angeordnet, dass er mittig bezüglich der Breitenrichtung des Heckbereichs angeordnet ist, wobei auch die Anhängervorrichtung mittig in Breitenrichtung des Heckbereichs angeordnet ist. Ausgehend von dem ersten Ultraschallsensor und der Anhängervorrichtung liegen diese beiden Komponenten daher in dieser Breitenrichtung betrachtet zentral und somit auf der mittig liegenden Längsachse des Kraftfahrzeugs. Die Anhängerkupplung kann vorzugsweise im Wesentlichen in der Hauptsenderichtung des ersten Ultraschallsensors liegen.

Vorzugsweise wird der erste Ultraschallsensor derart am Heckbereich angeordnet, dass er bei einer Projektion in eine Horizontalebene zumindest im Wesentlichen auf einer Längsachse einer im Heckbereich des Kraftfahrzeugs angeordneten Anhängervorrichtung liegt. Gerade bei derartigen Ausgestaltungen tritt die oben genannte Problematik wesentlich in den Vordergrund, so dass gerade für diese Ausgestaltungen ein erfindungsgemäßer Betrieb des ersten Ultraschallsensors wesentlich vorteilhaft ist. Da bei diesen Ausgestaltungen ein besonders geringer Abstand zwischen dem ersten Ultraschallsensor und der Anhängervorrichtung gegeben ist, kann durch einen ausschließlichen Empfangsbetrieb dieses ersten Ultraschallsensors eine hohe Anzahl von Echosignalen eines eigenen ausgesendeten Sendesignals des ersten Ultraschallsensors verhindert werden.

Vorzugsweise wird der zumindest eine andere Ultraschallsensor dahingehend betrieben, dass er ein Sendesignal aussendet, welches auch an der Anhängervorrichtung als Anhängervorrichtungs-Echosignal reflektiert wird. Dieses Anhängervorrichtungs-Echosignal wird vom ersten Ultraschallsensor empfangen und bei der Auswertung der von einem Objekt in der Umgebung des Kraftfahrzeugs empfangenen Echosignalen ausgefiltert. Es wird also dann relativ einfach ermöglicht, derartige unerwünschte Echosignale von der Anhängervorrichtung zu erkennen und für die Auswertung, ob und gegebenenfalls wo ein Objekt in der Umgebung des Fahrzeugs sich befindet, nicht berücksichtigt. Es wird bei dieser Ausgestaltung der zumindest eine andere Ultraschallsensor somit so betrieben beziehungsweise ist so angeordnet und ausgebildet, dass eine Schallkeule eines Sendesignals beziehungsweise der Kegel der Sendesignale derart sich orientiert, dass er auch die Anhängervorrichtung umfasst beziehungsweise diese in diesem Sendebereich liegt. Durch diese Ausgestaltung wird somit ein relativ großer beziehungsweise breiter Sendekegel der anderen Ultraschallsensoren vorgegeben, so dass hier auch ein sehr großer Bereich im Heckbereich des Fahrzeugs abgedeckt und erfasst werden kann. Obwohl sich dadurch dann auch Anhängervorrichtungs-Echosignale ergeben, können diese dann einfach ausgefiltert und erkannt werden und somit eine hohe Detektionsgenauigkeit eines kraftfahrzeugexternen Objekts auch dann erreicht werden, wenn im Detektionsbereich der Ultraschallsensorvorrichtung auch fahrzeugfeste Elemente angeordnet sind.

Bei einer vorteilhaften alternativen Ausführung wird der erste Ultraschallsensor erst dann zum Empfang von Echosignalen betrieben, wenn eine vorbekannte Zeitdauer zwischen einem Aussenden eines Sendesignals des anderen Ultraschallsensors und einem Eintreffen eines dazu an der Anhängervorrichtung reflektierten Anhängervorrichtungs-Echosignals dieses Sendesignals abgelaufen ist. Durch einen derartigen Betrieb wird wiederum auf Basis der bereits oben genannten, ohnehin abgespeicherten Informationen bezüglich der Abstände der Ultraschallsensoren zueinander und der Abstände der Ultraschallsensoren zu der Anhängervorrichtung der Empfangsbetrieb des ersten Ultraschallsensors erst dann aktiv gestartet, wenn eine Zeitdauer abgelaufen ist, die sich vom Aussenden eines Sendesignals eines anderen Ultraschallsensors bis zu einem möglichen Eintreffen eines diesbezüglichen Echos an der Anhängervorrichtung beim ersten Ultraschallsensor bestimmt. Durch diese Ausgestaltung wird grundsätzlich vermieden, dass derartige Anhängervorrichtungs-Echosignale von dem ersten Ultraschallsensor erfasst werden und dann im Nachgang in der Signalverarbeitung oder auf andere Art und Weise erkannt und ausgefiltert werden müssten. Durch diese Ausgestaltung wird somit der Verarbeitungsaufwand der Signale reduziert.

In einer besonders vorteilhaften Ausführung wird vorgesehen, dass am Heckbereich des Kraftfahrzeugs nur drei Ultraschallsensoren angeordnet werden. Dies ist eine sehr minimalistische Ausgestaltung, die es dennoch ermöglicht, eine Objekterfassung in der Umgebung des Kraftfahrzeugs durchzuführen. Bei dieser Ausgestaltung ist es dann aufgrund der symmetrischen Anordnung quasi immer gegeben, dass der mittlere Ultraschallsensor auf einer Längsachse der Anhängerkupplung, die sich auch in Längsrichtung des Kraftfahrzeugs erstreckt, zum Liegen kommt, wenn eine Projektionsbetrachtung dieses ersten Ultraschallsensors und der Anhängervorrichtung in einer Horizontalebene erfolgt.

Des Weiteren betrifft die Erfindung eine Fahrerassistenzeinrichtung mit einer Ultraschallsensorvorrichtung, welche eine Vielzahl von im Heckbereich eines Kraftfahrzeugs angeordneten Ultraschallsensoren aufweist. Mittels dieser Ultraschallsensoren ist eine Erfassung eines Objekts in der Umgebung des Kraftfahrzeugs durchführbar. Ein wesentlicher Gedanke der erfindungsgemäßen Fahrerassistenzeinrichtung ist darin zu sehen, dass ein erster Ultraschallsensor der im Heckbereich angeordneten Ultraschallsensoren in einem Objekterfassungsbetrieb zum Erfassen eines von einer am Heckbereich angeordneten Anhängervorrichtung unterschiedlichen Objekts nur zum Empfangen von Echosignalen von von zumindest einem anderen Ultraschallsensor ausgesendeten Sendesignalen betrieben ist und das Senden von eigenen Sendesignalen dieses ersten Ultraschallsensors verhindert bzw. deaktiviert ist. Die diesbezüglich erreichbaren Vorteile wurden bereits zum erfindungsgemäßen Verfahren genannt.

Vorzugsweise ist vorgesehen, dass der erste Ultraschallsensor derart am Heckbereich angeordnet ist, dass er bei einer Projektion in eine Horizontalebene zumindest im Wesentlichen auf einer Längsachse einer im Heckbereich des Kraftfahrzeugs angeordneten Anhängervorrichtung liegt. Auch hier wurden die Vorteile bereits oben genannt.

Vorzugsweise ist vorgesehen, dass am Heckbereich des Fahrzeugs nur drei Ultraschallsensoren angeordnet sind, so dass ein diesbezüglich minimalistisches System ausgebildet ist.

Des Weiteren betrifft die Erfindung auch ein Kraftfahrzeug mit einer erfindungsgemäßen Fahrerassistenzeinrichtung oder einer vorteilhaften Ausgestaltung davon. In dem Zusammenhang sind vorteilhafte Ausführungen des erfindungsgemäßen Verfahrens auch als vorteilhafte Ausführungen der erfindungsgemäßen Fahrerassistenzeinrichtung zu sehen, wobei hierzu die entsprechenden Komponenten der Fahrerassistenzeinrichtung alleine oder in Kombination zur Durchführung der jeweiligen Verfahrensschritte ausgebildet sind.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: eine Draufsicht auf ein Ausführungsbeispiel eines erfindungsgemäßen Kraftfahrzeugs; und
- Fig. 2: eine Draufsicht auf den Heckbereich des Kraftfahrzeugs gemäß Fig. 1 in schematischer Darstellung.

In den Figuren werden gleiche oder funktionsgleiche Elemente mit den gleichen Bezugszeichen versehen.

In Fig. 1 ist in einer Draufsicht ein Kraftfahrzeug 1 gezeigt, welches eine Fahrerassistenzeinrichtung 2 aufweist. Die Fahrerassistenzeinrichtung 2 kann beispielsweise ein Parkassistenzsystem oder ein ACC-System sein. Die Fahrerassistenzeinrichtung 2 umfasst dazu eine Ultraschallsensorvorrichtung 3, die in einem Heckbereich 4 des Kraftfahrzeugs 1 eine Mehrzahl von Ultraschallsensoren 5, 6 und 7 aufweist und somit im Ausführungsbeispiel nur drei Ultraschallsensoren 5 bis 7 umfasst.

Die Ultraschallsensorvorrichtung 3 kann insbesondere auch darüber hinausgehend in einem Frontbereich 8 des Kraftfahrzeugs 1 weitere Ultraschallsensoren aufweisen.

Die Fahrerassistenzeinrichtung 2 umfasst darüber hinaus eine Steuereinheit 9, die mit der Ultraschallsensorvorrichtung 3, und insbesondere mit den Ultraschallsensoren 5 bis 7, zur Kommunikation verbunden ist, und welche abhängig von der vorgesehenen Funktion der Fahrerassistenzeinrichtung 2 auf Basis der von den Ultraschallsensoren 5 bis 7 zumindest erhaltenen Informationen beispielsweise einen semiautonomen oder vollautonomen Parkvorgang des Kraftfahrzeugs 1 oder ein Abbremsen des Kraftfahrzeugs 1 durchführt. Die Funktionalität der Fahrerassistenzeinrichtung 2 ist nicht nur auf ein Parkassistenzsystem oder ein ACC-System beschränkt, vielmehr kann die Fahrerassistenzeinrichtung 2 funktionell auch anderweitig ausgestaltet sein.

In der gezeigten Ausführung ist vorgesehen, dass der mittlere erste Ultraschallsensor 6 auf einer Längsachse A des Kraftfahrzeugs 1 sich befindet, wobei diese Längsachse auch eine Längsachse einer Anhängervorrichtung 10, die im Heckbereich 4 fest angeordnet ist, verläuft. Bei der in Fig. 1 gezeigten Projektion in eine Horizontalebene liegt somit dieser erste Ultraschallsensor 6 auf der Längsachse A und somit auch auf der Längsachse der Anhängervorrichtung 10, die eine Anhängerkupplung sein kann. In anderen Worten liegt die Anhängerkupplung im Wesentlichen in der Hauptsenderichtung des ersten Ultraschallsensors 6.

Die Ultraschallsensoren 5 bis 7 sind zur Detektion eines Objekts 11 in einer Umgebung des Kraftfahrzeugs 1 ausgebildet.

Insbesondere in der Steuereinheit 9 sind auch Informationen abgespeichert, die den Abstand der Ultraschallsensoren 5 bis 7 zueinander umfassen. Ebenso sind hier Abstände der Ultraschallsensoren 5 bis 7 zu der Anhängervorrichtung 10 abgespeichert.

Es ist vorgesehen, dass der erste Ultraschallsensor 6 nur in einem Empfangsbetrieb betrieben wird. Dies bedeutet, dass er keine eigenen Sendesignale aussendet, sondern lediglich zum Empfang von Echosignalen betrieben wird. Wird somit von den anderen Ultraschallsensoren 5 und 7 ein Aussenden von Sendesignalen durchgeführt, die dann an dem Objekt 11 reflektiert werden, so werden sie von dem ersten Ultraschallsensor 6 empfangen.

Im Ausführungsbeispiel ist auch vorgesehen, dass die anderen Ultraschallsensoren 5 und 7 einen derartigen Sendekegel aufweisen, dass die ausgesendeten Sendesignale auch zur Anhängervorrichtung 10 gelangen können und dort reflektiert werden können. Diese dann an der Anhängervorrichtung 10 reflektierten Sendesignale sind dann Anhängervorrichtungs-Echosignale, die ebenfalls von dem ersten Ultraschallsensor 6 in seinem anschließenden Empfangsbetrieb empfangen werden können. Dies ist dann der Fall, wenn der Empfangsbetrieb des ersten Ultraschallsensors 6 auch dann erfolgt und somit dieser Betrieb aktiv ist, wenn die Zeitdauer von dem Aussenden eines Sendesignals eines anderen Ultraschallsensors 5 und/oder 7 bis zum Eintreffen eines Anhängervorrichtungs-Echosignals beim ersten Ultraschallsensor 6 noch nicht abgelaufen ist. Bei einer derartigen Ausgestaltung wird dann im Nachgang beispielsweise ein Ausfiltern dieser Anhängervorrichtungs-Echosignale beispielsweise durch die Steuereinheit 9 durchgeführt, um dann die tatsächliche Detektion des Objekts 11 präzise und einwandfrei erhalten und von der Anhängervorrichtung 10 unterscheiden zu können.

Es kann jedoch auch vorgesehen sein, dass der aktive Empfangsbetrieb des ersten Ultraschallsensors 6 erst dann erfolgt, wenn eine Zeitdauer von einem Aussenden eines Sendesignals eines anderen Ultraschallsensors 5 und/oder 7 und einem Eintreffen eines diesbezüglichen Anhängervorrichtungs-Echosignals beim ersten Ultraschallsensor 6 abgelaufen ist. In einem derartigen Betrieb werden dann grundsätzlich keine Anhängervorrichtungs-Echosignale von dem ersten Ultraschallsensor 6 in einem Empfangsbetrieb empfangen.

In Fig. 2 ist in einer vergrößerten Darstellung der Heckbereich 4 des Kraftfahrzeugs 1 gezeigt. Die anderen Sensoren 5 und 7 sind sowohl zum Senden von Sendesignalen als auch zum Empfangen von Echosignalen ausgebildet. Sie können in dem Zusammenhang insbesondere jeweils Echosignale der eigenen Sendesignale, wie sie an dem Objekt 11 reflektiert wurden, empfangen. Es kann auch vorgesehen sein, dass sie zusätzlich Echosignale empfangen, die Sendesignale des jeweils anderen Ultraschallsensors 5 oder 7 sind, die dann an dem Objekt 11 reflektiert wurden. Entsprechend kann dies auch dann mit Signalen, die an der Anhängervorrichtung 10 reflektiert wurden, erfolgen, wobei diese dann durch die nachfolgende Signalverarbeitung wieder ausgefiltert werden können. In Fig. 2 ist durch die Pfeildarstellung auch skizziert, dass der erste Ultraschallsensor 6 nur zum Empfangen von Echosignalen betrieben wird und keine eigenen Sendesignale aussendet, wenn das Fahrerassistenzsystem beziehungsweise die Fahrerassistenzeinrichtung 2 aktiv betrieben wird und die Anhängervorrichtung 10 vorhanden ist.

## Patentansprüche

1. Verfahren zum Unterdrücken von Echosignalen einer Anhängervorrichtung an einem Heckbereich (4) eines Kraftfahrzeugs (1), bei welchem eine Ultraschallsensorvorrichtung (3) mit einer Mehrzahl von Ultraschallsensoren (5, 6, 7) im Heckbereich (4) angeordnet wird, und mittels der Ultraschallsensorvorrichtung (3) eine Erfassung eines Objekts (11) in der Umgebung des Kraftfahrzeugs (1) durchgeführt wird,
**dadurch gekennzeichnet, dass**
ein erster Ultraschallsensor (6) der im Heckbereich (4) angeordneten Ultraschallsensoren (5, 6, 7) in einem Objekterfassungsbetrieb zum Erfassen eines von einer im Heckbereich (4) angeordneten Anhängervorrichtung (10) unterschiedlichen Objekts (11) nur zum Empfangen von Echosignalen von von zumindest einem anderen Ultraschallsensor (5, 7) ausgesendeten Sendesignalen betrieben wird und das Senden von Sendesignalen dieses ersten Ultraschallsensors (6) verhindert wird.

2. Verfahren nach Anspruch 1,
**dadurch gekennzeichnet, dass**
der erste Ultraschallsensor (6) derart am Heckbereich (4) angeordnet wird, dass er bei einer Projektion in eine Horizontalebene zumindest im Wesentlichen auf einer Längsachse (A) der im Heckbereich (4) des Kraftfahrzeugs (1) angeordneten Anhängervorrichtung (10) liegt.

3. Verfahren nach Anspruch 1 oder 2,
**dadurch gekennzeichnet, dass**
der andere Ultraschallsensor (5, 7) ein Sendesignal aussendet, welches auch an der Anhängervorrichtung (10) als Anhängervorrichtungs-Echosignal reflektiert wird, wobei das Anhängervorrichtungs-Echosignal vom ersten Ultraschallsensor (6) empfangen wird und bei der Auswertung der von einem Objekt (11) empfangenen Echosignale ausgefiltert wird.

4. Verfahren nach Anspruch 3,
**dadurch gekennzeichnet, dass**
ein Anhängervorrichtungs-Echosignal abhängig von einer Zeitdauer zwischen dem Aussenden eines Sendesignals von dem anderen Ultraschallsensor (5, 7) und dem Empfangen des Anhängervorrichtungs-Echosignal vom ersten Ultraschallsensor (6) von einem Echosignal eines Objekts (11) unterschieden wird.

5. Verfahren nach Anspruch 1 oder 2,
**dadurch gekennzeichnet, dass**
der erste Ultraschallsensor (6) erst dann zum Empfang von Echosignalen betrieben wird, wenn eine vorbekannte Zeitdauer zwischen einem Aussenden eines Sendesignals des anderen Ultraschallsensors und einem Eintreffen eines dazu an der Anhängervorrichtung (10) reflektierten Anhängervorrichtungs-Echosignals dieses Sendesignal abgelaufen ist.

6. Verfahren nach einem der vorhergehenden Ansprüche,
**dadurch gekennzeichnet, dass**
am Heckbereich (4) nur drei Ultraschallsensoren (5, 6, 7) angeordnet werden.

7. Fahrerassistenzeinrichtung (2) mit einer Ultraschallsensorvorrichtung (3), welche eine Vielzahl von in einem Heckbereich (4) eines Kraftfahrzeugs (1) angeordneten Ultraschallsensoren (5, 6, 7) aufweist, bei welchem mittels der Ultraschallsensorvorrichtung (2) eine Erfassung eines Objekts (11) in der Umgebung des Kraftfahrzeugs (1) durchgeführt wird,
**dadurch gekennzeichnet, dass**
ein erster Ultraschallsensor (6) der im Heckbereich (4) angeordneten Ultraschallsensoren (5, 6, 7) in einem Objekterfassungsbetrieb zum Erfassen eines von einer im Heckbereich (4) angeordneten Anhängervorrichtung (10) unterschiedlichen Objekts (11) nur zum Empfangen von Echosignalen von von zumindest einem anderen Ultraschallsensor (5, 7) ausgesendeten Sendesignalen betrieben ist und das Senden von Sendesignalen dieses ersten Ultraschallsensors (6) verhindert ist.

8. Fahrerassistenzeinrichtung (2) nach Anspruch 7,
**dadurch gekennzeichnet, dass**
der erste Ultraschallsensor (6) derart am Heckbereich (4) angeordnet ist, dass er bei einer Projektion in eine Horizontalebene zumindest im Wesentlichen auf einer Längsachse (A) der im Heckbereich (4) des Kraftfahrzeugs (1) angeordneten Anhängervorrichtung (10) liegt.

9. Fahrerassistenzeinrichtung (2) nach Anspruch 7 oder 8,
**dadurch gekennzeichnet, dass**
am Heckbereich (4) nur drei Ultraschallsensoren (5, 6, 7) angeordnet sind.

10. Kraftfahrzeug (1) mit einer Fahrerassistenzeinrichtung (2) nach einem der Ansprüche 7 bis 9.

## Claims

1. Method for rejecting echo signals from a trailer apparatus on a rear region (4) of a motor vehicle (1), in which an ultrasonic sensor apparatus (3) having a plurality of ultrasonic sensors (5, 6, 7) is arranged in the rear region (4), and the ultrasonic sensor apparatus (3) is used to perform detection of an object (11) in the surroundings of the motor vehicle (1),
**characterized in that**
a first ultrasonic sensor (6) of the ultrasonic sensors (5, 6, 7) arranged in the rear region (4), in an object detection mode for detecting an object (11) that is different from a trailer apparatus (10) arranged in the rear region (4), is operated only for the purpose of receiving echo signals from transmission signals transmitted by at least one other ultrasonic sensor (5, 7), and the sending of transmission signals from this first ultrasonic sensor (6) is prevented.

2. Method according to Claim 1,
**characterized in that**
the first ultrasonic sensor (6) is arranged on the rear region (4) such that, in a projection into a horizontal plane, it is situated at least essentially on a longitudinal axis (A) of the trailer apparatus (10) arranged in the rear region (4) of the motor vehicle (1).

3. Method according to Claim 1 or 2,
**characterized in that**
the other ultrasonic sensor (5, 7) transmits a transmission signal that is also reflected from the trailer apparatus (10) as a trailer apparatus echo signal, wherein the trailer apparatus echo signal is received by the first ultrasonic sensor (6) and is filtered out on evaluation of the echo signals received from an object (11).

4. Method according to Claim 3,
**characterized in that**
a trailer apparatus echo signal is distinguished from an echo signal from an object (11) on the basis of a period of time between transmission of a transmission signal by the other ultrasonic sensor (5, 7) and reception of the trailer apparatus echo signal by the first ultrasonic sensor (6).

5. Method according to Claim 1 or 2,
**characterized in that**
the first ultrasonic sensor (6) is operated for the purpose of receiving echo signals only when a previously known period of time between a transmission of a transmission signal from the other ultrasonic sensor and an arrival of a trailer apparatus echo signal, reflected therefor from the trailer apparatus (10), for this transmission signal has elapsed.

6. Method according to one of the preceding claims,
**characterized in that**
the rear region (4) has only three ultrasonic sensors (5, 6, 7) arranged on it.

7. Driver assistance device (2) having an ultrasonic sensor apparatus (3) that has a multiplicity of ultrasonic sensors (5, 6, 7) arranged in a rear region (4) of a motor vehicle (1) in which the ultrasonic sensor apparatus (2) is used to perform detection of an object (11) in the surroundings of the motor vehicle (1),
**characterized in that**
a first ultrasonic sensor (6) of the ultrasonic sensors (5, 6, 7) arranged in the rear region (4), in an object detection mode for detecting an object (11) that is different from a trailer apparatus (10) arranged in the rear region (4), is operated only for the purpose of receiving echo signals from transmission signals transmitted by at least one other ultrasonic sensor (5, 7), and the sending of transmission signals from this first ultrasonic sensor (6) is prevented.

8. Driver assistance device (2) according to Claim 7,
**characterized in that**
the first ultrasonic sensor (6) is arranged on the rear region (4) such that, in a projection into a horizontal plane, it is situated at least essentially on a longitudinal axis (A) of the trailer apparatus (10) arranged in the rear region (4) of the motor vehicle (1).

9. Driver assistance device (2) according to Claim 7 or 8,
**characterized in that**
the rear region (4) has only three ultrasonic sensors (5, 6, 7) arranged on it.

10. Motor vehicle (1) having a driver assistance device (2) according to one of Claims 7 to 9.

## Revendications

1. Procédé destiné à la suppression de signaux d'écho d'un dispositif de remorque sur une zone arrière (4) d'un véhicule automobile (1), dans lequel un dispositif de capteurs à ultrasons (3) avec une pluralité de capteurs à ultrasons (5, 6, 7) est disposé dans la zone arrière (4), et une détection d'un objet (11) est effectuée dans l'environnement du véhicule automobile (1) au moyen du dispositif de capteurs à ultrasons (3),
**caractérisé en ce**
**qu'**un premier capteur à ultrasons (6) des capteurs à ultrasons (5, 6, 7) disposés dans la zone arrière (4) n'est activé dans un mode de détection d'objets pour la détection d'un objet (11) différent d'un dispositif de remorque (10) disposé dans la zone arrière (4) que pour la réception de signaux d'écho de signaux d'émission émis par au moins un autre capteur à ultrasons (5, 7), et l'émission de signaux d'émission de ce premier capteur à ultrasons (6) est empêchée.

2. Procédé selon la revendication 1,
**caractérisé en ce que**
le premier capteur à ultrasons (6) est disposé sur la zone arrière (4) de telle sorte que, dans une projection dans un plan horizontal, il repose au moins essentiellement sur un axe longitudinal (A) du dispositif de remorque (10) disposé dans la zone arrière (4) du véhicule automobile (1).

3. Procédé selon la revendication 1 ou 2,
**caractérisé en ce que**
l'autre capteur à ultrasons (5, 7) émet un signal d'émission qui est également réfléchi sur le dispositif de remorque (10) en tant que signal d'écho de dispositif de remorque, le signal d'écho de dispositif de remorque étant reçu par le premier capteur à ultrasons (6) et filtré lors de l'analyse des signaux d'écho reçus en provenance d'un objet (11).

4. Procédé selon la revendication 3,
**caractérisé en ce**
**qu'**un signal d'écho de dispositif de remorque est distingué d'un signal d'écho d'un objet (11) en fonction d'une durée entre l'émission d'un signal d'émission en provenance de l'autre capteur à ultrasons (5, 7) et la réception du signal d'écho de dispositif de remorque en provenance du premier capteur à ultrasons (6).

5. Procédé selon la revendication 1 ou 2,
**caractérisé en ce que**
le premier capteur à ultrasons (6) n'est activé pour la réception que quand une durée déjà connue entre une émission d'un signal d'émission de l'autre capteur à ultrasons et une arrivée d'un signal d'écho de dispositif de remorque, de ce signal d'émission, réfléchi sur le dispositif de remorque (10) est expirée.

6. Procédé selon l'une des revendications précédentes,
**caractérisé en ce que**,
sur la zone arrière (4), seuls trois capteurs à ultrasons (5, 6, 7) sont disposés.

7. Système d'assistance à la conduite (2) avec un dispositif de capteurs à ultrasons (3), qui présente une multiplicité de capteurs à ultrasons (5, 6, 7) disposés dans une zone arrière (4) d'un véhicule automobile (1), dans lequel, au moyen d'un dispositif de capteurs à ultrasons (2), une détection d'un objet (11) dans l'environnement du véhicule automobile (1) est effectuée,
**caractérisé en ce**
**qu'**un premier capteur à ultrasons (6) des capteurs à ultrasons (5, 6, 7) disposés dans la zone arrière (4) n'est activé dans un mode de détection d'objet destiné à la détection d'un objet (11) différent du dispositif de remorquage (10) disposé dans la zone arrière (4) que pour la réception de signaux d'écho de signaux d'émission émis par au moins un autre capteur à ultrasons (5, 7), et l'émission de signaux d'émission de ce premier capteur à ultrasons (6) est empêchée.

8. Système d'assistance à la conduite (2) selon la revendication 7,
**caractérisé en ce que**
le premier capteur à ultrasons (6) est disposé sur la zone arrière (4) de telle sorte que, dans une projection dans un plan horizontal, il repose au moins essentiellement sur un axe longitudinal (A) du dispositif de remorque (10) disposé dans la zone arrière (4) du véhicule automobile (1).

9. Système d'assistance à la conduite (2) selon la revendication 7 ou 8,
**caractérisé en ce que**,
sur la zone arrière (4), seuls trois capteurs à ultrasons (5, 6, 7) sont disposés.

10. Véhicule automobile (1), avec un système d'assistance à la conduite (2) selon l'une des revendications 7 à 9.
